# EUROPEAN PATENT APPLICATION

(11) **EP 4 525 300 A1**
(43) Date of publication of application: **19.03.2025**
(21) Application number: 23803876.4
(22) Date of filing: 12.05.2023
(51) Int. Cl.: H02S 50/10, G06V 10/774, G06V 10/82, G06T 7/00, G06N 3/08

(54) **DEVICE FOR INSPECTING DEFECT OF SOLAR PANEL AND METHOD FOR OPERATING SAME**

(30) Priority: 12.05.2022 KR 20220058133
(71) Applicant: SK Planet Co., Ltd., Seongnam-si, Gyeonggi-do 13487 (KR)
(72) Inventor: PARK, Yeonghyeon, Cheonan-si Chungcheongnam-do 31061 (KR)
(74) Representative: Novagraaf Technologies
(86) International application number: PCT/KR2023/006463
(87) International publication number: WO 2023/219453

(57) **Abstract**

The present invention relates to a device for detecting a defect of a solar panel and a method for operating same, wherein the device for detecting a defect of a solar panel comprises: a model providing unit that provides a pre-trained model; a communication module that receives captured images of a solar panel from an image sensor; a processing module functionally connected to the model providing unit and the communication module, wherein the processing module is configured to collect the captured images of the solar panel, apply the captured images to the pre-trained model to create an attention map, and determine whether there is a defect in the solar panel depending on whether the attention map is abnormal.

## Description

### [Technical Field]

The present invention relates to a scheme for supporting rapid and accurate inspection of solar panels for defects.

### [Background Art]

The use of fossil fuels such as oil and coal has caused various environmental problems such as air pollution. Recently, there has been a lot of development on eco-friendly energy sources to replace fossil fuels, and as part of this, interest in solar power generation has been rapidly increasing.

The solar power generation is the production of energy using solar cells that convert sunlight received into electrical energy. Solar panels with multiple solar cells arranged in an array are installed in a location where sunlight is well-absorbed to produce energy.

In general, the solar panels are installed in large numbers in very wide areas to produce a lot of energy or installed on rooftops or roofs of buildings that are good for collecting sunlight. However, since the solar panels are installed and operated outdoors, they are directly exposed to the influence of the external environment. Thus, the solar panels often have defects, which can lead to a sharp decrease in solar power generation or an increased risk of fire.

Therefore, it is important to determine the state of the solar panels and quickly replace abnormal solar panels. In addition, many defects may occur during the manufacturing process of the solar panels, so a method is required to quickly inspect the solar panels with such defects and replace or repair them.

### [Disclosure]

### [Technical Problem]

The present invention was created in consideration of the above circumstances, and an object of the present invention is to provide a device and method that can quickly and accurately determine whether or not there is an abnormality in a solar panel during a process of manufacturing the solar panel and a process of using the solar panel after installation.

Other various objects of the present invention will be mentioned together with the description of embodiments below.

### [Technical Solution]

To achieve the above objects, a device for inspecting a defect in a solar panel according to an embodiment of the present invention includes a model providing unit that provides a pre-trained model, a communication module that receives captured images of a solar panel from an image sensor, and a processing module functionally connected to the model providing unit and the communication module. The processing module is configured to collect the captured images of the solar panel, generate an attention map by applying the captured images to the pre-trained model, and determine whether there is a defect in the solar panel depending on whether the attention map is abnormal.

Specifically, the processing module applies an attention mechanism that includes convolutional neural network training on a large-scale public data set.

Specifically, the processing module is configured to extract at least one statistical feature from the attention map, detect a correlation between the extracted statistical feature and a label value indicating a defective solar panel, and determine whether the solar panel is defective based on a degree of the correlation.

Specifically, the processing module is configured to extract a standard deviation of a surface flatness of the solar panel from the attention map, and detect a correlation between a standard deviation of a surface flatness of the defective solar panel and the standard deviation of the surface flatness extracted from the attention map.

Specifically, the processing module is configured to extract at least one of an average value of the surface flatness, a kurtosis of the surface flatness, and a skewness of the surface flatness, and detect a correlation between at least one of the extracted average value, kurtosis, and skewness and at least one of an average value, kurtosis, and skewness in a map generated from an image of the defective solar panel.

Specifically, the defect inspection device further include an output module that outputs a guidance message indicating whether the solar panel is defective.

To achieve the above objects, a method for inspecting a defect in a solar panel according to an embodiment of the present invention includes preparing a pre-trained model, collecting captured images of the solar panel, generating an attention map by applying the captured images to the pre-trained model, and determining whether there is a defect in the solar panel depending on whether the attention map is abnormal.

Specifically, preparing the pre-trained model includes applying an attention mechanism that includes convolutional neural network training on a large-scale public data set.

Specifically, determining whether there is the defect includes extracting at least one statistical feature from the attention map, detecting a correlation between the extracted statistical feature and a label value indicating a defective solar panel, and determining whether the solar panel is defective based on a degree of the correlation.

Specifically, extracting the statistical feature includes extracting a surface flatness of the solar panel from the attention map, and detecting the correlation includes detecting a correlation between a surface flatness of the defective solar panel and the surface flatness extracted from the attention map.

Specifically, extracting the statistical feature includes extracting at least one of an average value of the surface flatness, a kurtosis of the surface flatness, and a skewness of the surface flatness, and detecting the correlation includes detecting a correlation between at least one of the extracted average value, kurtosis, and skewness and at least one of an average value, kurtosis, and skewness in a map generated from an image of the defective solar panel.

Specifically, the method further includes outputting a guidance message indicating whether the solar panel is defective.

### [Advantageous Effects]

According to an embodiment of the present invention, a device for inspecting defects in a solar panel and a method for operating the same can quickly and accurately determine whether there is an abnormality in the solar panel during a manufacturing process of the solar panel, thereby reducing the use of defective solar panels and providing high reliability.

In addition, according to the present invention, by determining whether there is an abnormality based on the flatness of the solar panel in an environment where the solar panel is used, it is relatively less affected by surrounding environments compared to defect detection using thermal imaging, thus providing more accurate results.

Other effects of the present invention will be described through embodiments described below.

### [Description of Drawings]

FIG. 1 is a diagram showing various states of a solar panel.
FIG. 2 is a diagram showing the standard deviation values for the surface flatness of a non-defective solar panel and the standard deviation values for the surface flatness of a defective solar panel.
FIG. 3 is a diagram showing an example of various feature values that can be applied to the present invention.
FIG. 4 is a diagram showing an example of an attention map for the MNIST data set among large-scale public data sets of pre-trained models.
FIG. 5 is a diagram showing an original solar panel image and an attention map.
FIG. 6 is a diagram showing a correlation coefficient between an extracted feature and a label indicating whether a solar panel is defective.
FIG. 7 is a diagram showing defect detection performance using various learning models.
FIG. 8 is a diagram showing AUROC values measured in a comparative experiment for the above-described defect detection performance.
FIG. 9 is a diagram showing an example of an environment in which a defect detection technology of a solar panel according to an embodiment of the present invention is applied.
FIG. 10 is a diagram showing an example of a configuration of a defect detection device of a solar panel according to an embodiment of the present invention.
FIG. 11 is an exemplary diagram of a hardware system for implementing a defect detection device according to an embodiment of the present invention.
FIG. 12 is a diagram showing an example of a signal flow between devices for defect detection of a solar panel according to an embodiment of the present invention.
FIG. 13 is a diagram showing an example of a method of operating a defect detection device in defect detection of a solar panel according to an embodiment of the present invention.

### [Mode for Invention]

It should be noted that the technical terms used in this description are used only to describe specific embodiments and are not intended to limit the present invention.

In addition, the technical terms used in this description should be interpreted as having a meaning generally understood by a person having ordinary skill in the art to which the present invention belongs, unless specifically defined otherwise in this description, and should not be interpreted in an overly comprehensive or overly narrow sense.

In addition, when technical terms used in this description are incorrect technical terms that do not accurately express the idea of the present invention, they should be replaced with technical terms that can be correctly understood by those skilled in the art, and general terms used in the present invention should be interpreted according to their dictionary definitions or the context, and should not be interpreted in an excessively narrow sense.

Hereinafter, preferred embodiments according to the present invention will be described in detail with reference to the accompanying drawings. Identical or similar components will be given the same reference numerals, and redundant descriptions thereof will be omitted.

In addition, when explaining the present invention, if it is judged that a specific description of a related known techniques may obscure the subject matter of the present invention, the detailed description thereof will be omitted.

In addition, it should be noted that the accompanying drawings are only intended to facilitate easy understanding of the present invention and should not be construed as limiting the scope of the present invention. The scope of the present invention should be construed as extending to all modifications, equivalents, and substitutes other than the accompanying drawings.

Hereinafter, preferred embodiments of the present invention will be described with reference to the accompanying drawings.

In the case of solar power generation, the efficiency varies depending on the type of panel. For example, between a monocrystalline solar panel and a polycrystalline solar panel which are different from each other in surface flatness (or smoothness), the monocrystalline solar panel with relatively high surface flatness shows higher efficiency. For example, the daily average efficiency of the monocrystalline solar panel is 6.65%, and the daily average efficiency of the polycrystalline solar panel is 5.38%. In addition, even if the surface of the initial solar panel is smooth, efficiency may decrease due to factors such as external damage, foreign substances, and aging. Thus, it is desirable to identify abnormal signs of the solar panel and repair them promptly in order to maintain appropriate power generation efficiency.

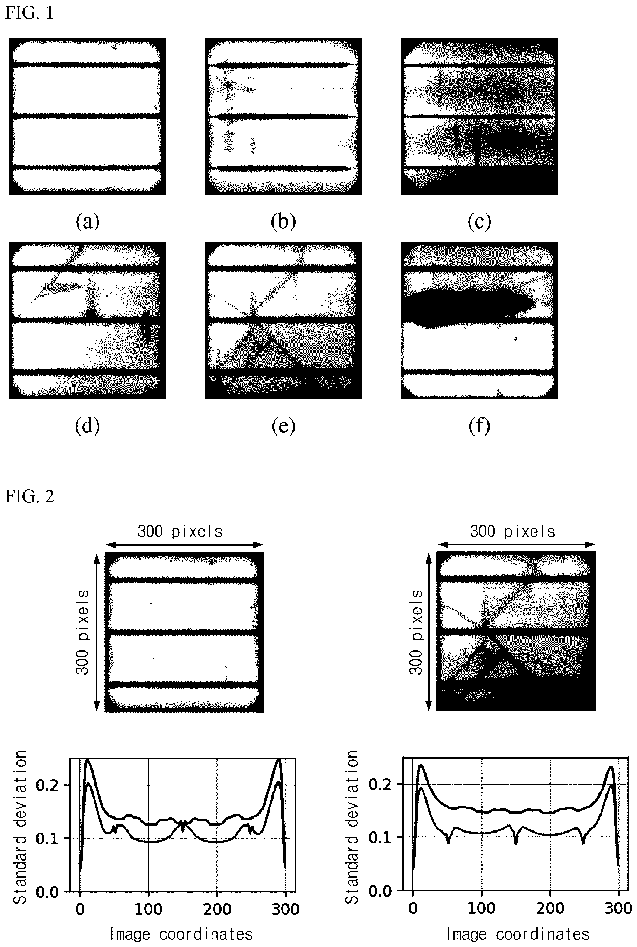

FIG. 1 is a diagram showing various states of a solar panel. For example, in FIG. 1, (a) shows an image of an area of a solar panel having a good state, and (b) and (c) show images of an area of a solar panel that is partially scratched. Also, in FIG. 1, (d) and (e) show images of an area of a solar panel that is partially cracked, and (f) shows an image of an area of a solar panel that is partially contaminated. As mentioned above, in order to maintain proper efficiency of a solar panel, it is necessary to capture an image of the solar panel that shows abnormal signs or has occurred abnormalities, analyze the captured image, and process it.

Previously, solar panel defect detection was performed based on machine learning or deep learning. However, the training process of machine learning or deep learning methods has a problem of high cost (or high computational volume) because original high-resolution images are supplied to the model for output calculation. In other words, even though solar panels have fixed patterns that are easy to understand, these features cannot be utilized, and cost loss occurs due to the use of expensive learning models such as deep learning. Therefore, the present invention considers a more concise model than before in order to reduce the computational cost such as the training process to an appropriate level.

In addition, the present invention supports performance improvement by additionally reusing a pre-trained model from the viewpoint of renewable energy efficiency. For example, in the present invention, even if the pre-trained model does not perform learning on solar panels, a pre-trained attention mechanism is used to detect key information of the image of the solar panel, thereby supporting improvement of defect detection performance. In this process, an attention map extracted through the attention mechanism is used to extract feature information for determining whether there is a defect in each area of the solar panel. The present invention can apply several concise classification methods by using simple statistical functions of the original image or attention map instead of using the entire pixel value.

A method of segmenting the image to mask the defective area of the solar panel is a useful approach, but it can be costly in terms of time and manpower because it is necessary to build a mask representing the defective area for all images in order to learn a segmentation model. In addition, since it is more economical to replace a defective solar panel than to repair it, it can be appropriately applied to the solar panel management by only checking whether defects have occurred rather than checking the location of defects in the solar panels.

In the present invention, the attention mechanism is applied, which is a method of finding out where feature information is located in an image. In the learning process, a predefined class determines the criteria for focus in an image (or video), but the attention mechanism can provide a more comprehensive result with less class dependence than a class activation map (CAM).

In order to verify the defect detection technology of the solar panel of the present invention, an electroluminescence photo voltaics (ELPV) data set is adopted, and each sample uses a high-resolution ELPV image of 300×300 size. In order to simplify the problem in the entire data set, monocrystalline data is used. Meanwhile, based on the characteristic that a defect-free panel has an evenly smooth surface as shown in (a) of FIG. 1, whereas a defect-detecting panel has an uneven surface, the present invention calculates the standard deviation for the entire image. The standard deviation is measured for each height and width axis considering the influence of the basic grid pattern common to all panels, and the measurement thereof is shown in FIG. 2.

FIG. 2 is a diagram showing the standard deviation values for the surface flatness of a non-defective solar panel and the standard deviation values for the surface flatness of a defective solar panel. A lower standard deviation indicates a smoother surface, and a higher standard deviation indicates a rougher surface. As shown, a defective solar panel exhibits a higher standard deviation than a non-defective solar panel. Accordingly, in the present invention, whether there is a defect in a solar panel is distinguished by using the standard deviation for each axis of the image in FIG. 2. In addition, by extending the above-described feature (providing defect detection performance through high and low standard deviations) to adopt more statistical values that can be extracted from the image, the defect detection performance can be improved.

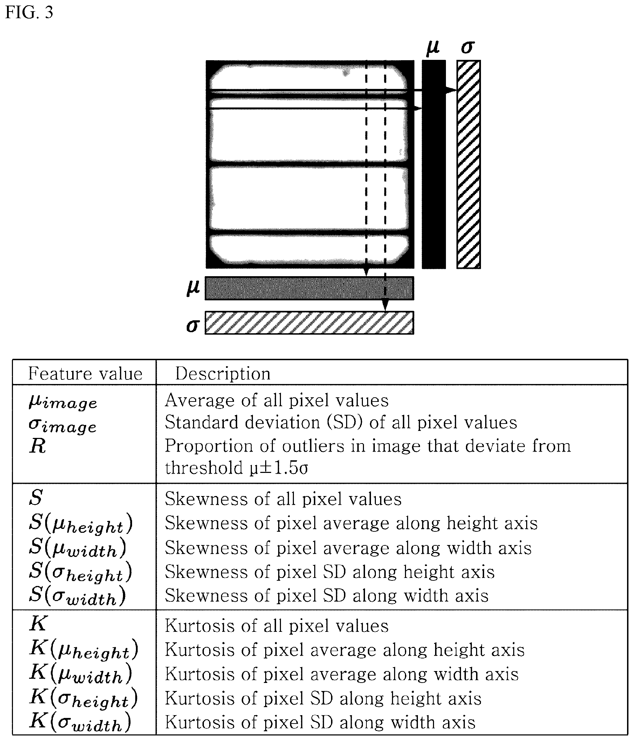

FIG. 3 is a diagram showing an example of various feature values that can be applied to the present invention. For example, in the present invention, defect identification performance can be improved by extracting 13 feature values (or characteristic values) as shown in FIG. 3 based on the average, skewness, and kurtosis of pixel values of the image in addition to the standard deviation.

Meanwhile, as described above, an attention mechanism can be utilized in relation to the defect presence/absence classification in the present invention, and for this purpose, neural network training can be applied. As such, since the present invention does not perform a labeling process for defining the defect type for all images, unnecessary costs are not incurred, and the attention mechanism of a model trained on a large-scale public data set such as Modified National Institute of Standards and Technology database (MNIST) can be used. In the present invention, a simple Convolutional Neural Network (CNN) including an intrinsic attention mechanism is trained using the MNIST data set and it is assumed as a pre-trained model, but the present invention is not limited thereto. For example, the data set for training the neural network in the present invention may be a large-scale public data set such as the MNIST data set or the ImageNet data set.

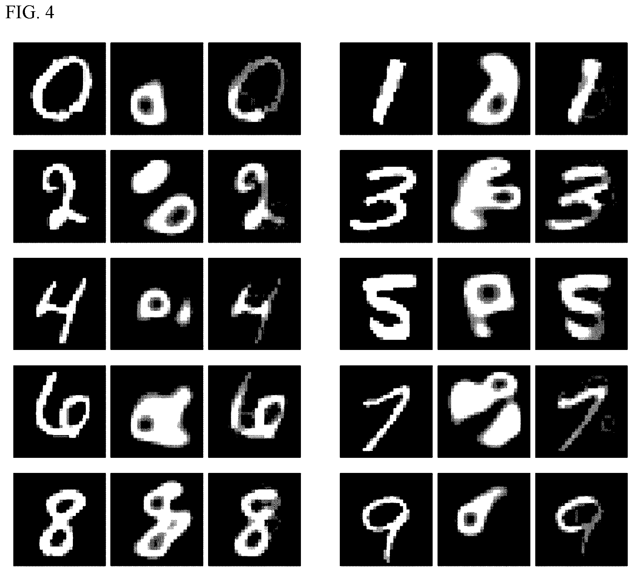

FIG. 4 is a diagram showing an example of an attention map for a large-scale public data set of a pre-trained model.

Regardless of whether the CNN model is trained on the large-scale public dataset (e.g., MNIST dataset or ImageNet dataset), the attention mechanism focuses on the end point, convergence point, or bending point of a stroke, so applying the attention for the focused point appropriately to a defective area will obtain an increased standard deviation value for the defective panel area of the solar panel. In addition, the present invention can improve the defect detection performance by applying feature extraction to the attention map. To this end, the present invention extracts the attention map for a captured image of the solar panel as a guide for defects by reusing the pre-trained CNN model. In relation to the attention mechanism of the solar panel, an image of the solar panel is provided to the pre-trained CNN model trained to classify handwritten digits for extraction of the attention map, and a qualitative evaluation is performed.

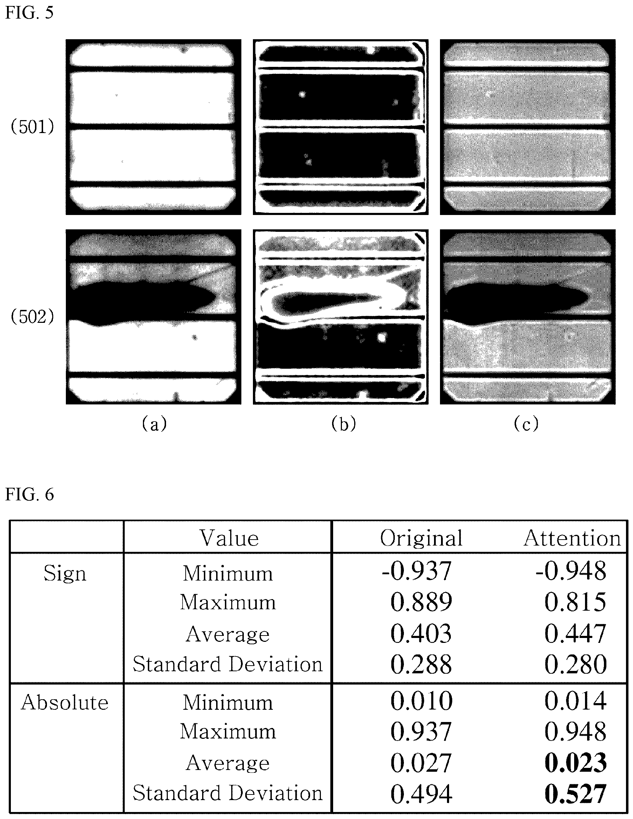

FIG. 5 is a diagram showing an original solar panel image and an attention map. As shown in FIG. 5, the pre-trained CNN model in the attention map is mainly interested in an area containing non-smooth and an area where surface texture is changed by contamination or grid, and a defective area is highlighted as shown. In FIG. 5, row 501 shows images of non-defective solar panels, and row 502 shows images of defective solar panels. Also, in FIG. 5, column (a) shows an original captured image of a part of a solar panel, column (b) shows an attention map for the original captured image, and column (c) shows an image where the original captured image and the attention map are sequentially overlapped. The 13 statistical features described above in FIG. 3 are extracted from the original image and the attention map, respectively.

FIG. 6 is a diagram showing a correlation coefficient between an extracted feature and a label indicating whether a solar panel is defective. As shown, it can be seen that the correlation between the original image and the attention map is very high.

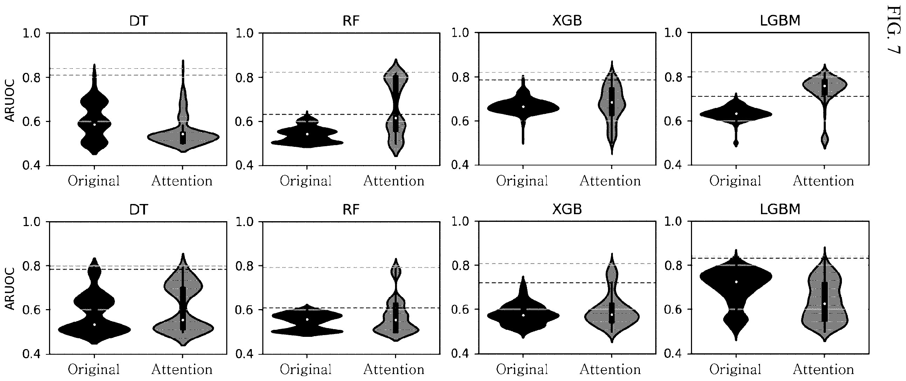

FIG. 7 is a diagram showing defect detection performance using various learning models. For example, the machine learning models shown in FIG. 7 are Decision Tree (DT), Random Forest (RF), Extreme Gradient Boosting (XGB), and Light Gradient Boosting Machine (LGBM). These machine learning models have lower computational costs than the case of applying deep learning even when a learning method is adopted. In training and verifying the machine learning models, the entire data set was divided in a ratio of 8:2 and applied, and performance measurements were performed for each hyperparameter on the assumption that each model can exhibit various performances depending on the hyperparameter. In the present invention, the area under the receiver operating characteristic curve is used as a defect detection performance indicator of a solar panel, and a rule-based model that compares the defect detection performances for 13 characteristic values is applied without a separate learning method.

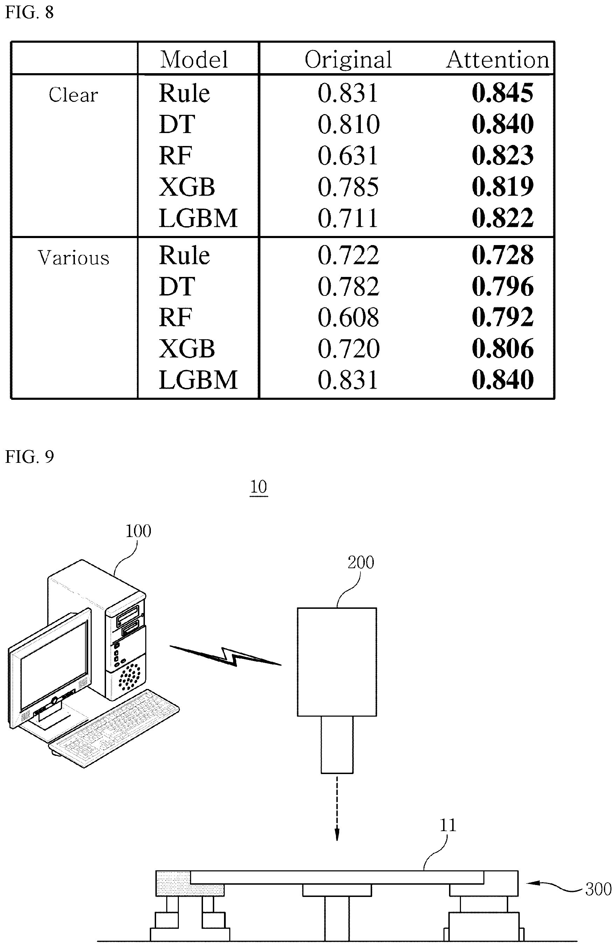

FIG. 8 is a diagram showing AUROC values measured in a comparative experiment for the above-described defect detection performance. As shown in FIG. 8, the maximum AUROC measured from the original data is 0.831, and the AUROC of the attention map is 0.845. From these results, it can be seen that the feature extraction method of the present invention operates at an appropriate level and the attention mechanism by the pre-learning model improves performance.

FIG. 9 is a diagram showing an example of an environment in which a defect detection technology of a solar panel according to an embodiment of the present invention is applied.

Referring to FIG. 9, a defect detection environment 10 of a solar panel according to an embodiment includes an inspection stand 300, a solar panel 11, an image sensor 200, and a defect detection device 100.

The inspection stand 300 includes a mounting stand on which the solar panel 11 can be placed. The inspection stand 300 further includes a transport device capable of transporting a plurality of solar panels 11. The inspection stand 300 including the transport device may be configured to transport the solar panel 11 at a specified speed for capturing an image of the solar panel 11 or may be temporarily stopped during the image capturing. At least a part of the inspection stand 300 may be aligned with the image sensor 200 vertically and horizontally. The inspection stand 300 is placed in a flat state for capturing an even image of the surface of the solar panel 11. In the case where the inspection stand 300 includes the transport device, the inspection stand 300 varies the movement path of the solar panel 11 depending on whether the solar panel 11 is defective. In this regard, the transport device of the inspection stand 300 is communicatively connected to the defect detection device 100, and in response to the control of the defect detection device 100, it can load defective detected solar panels at a different location from non-defective detected solar panels.

The solar panel 11 has a plurality of solar cells arranged in a designated pattern (e.g., a grid pattern). The solar cells can receive sunlight and generate electricity. After manufactured, the solar panel 11 is placed on the inspection stand 300 and captured by the image sensor 200. An image obtained by capturing the solar panel 11 is provided to the defect detection device 100. Meanwhile, in the function of detecting defects in the solar panel 11 described above, a case using a monocrystalline solar panel is mentioned, but the present invention is not limited thereto. Alternatively, the defect detection technology of the solar panel of the present invention may also be applied identically or similarly to a polycrystalline solar panel and any other solar panel including a repetitive pattern.

The image sensor 200 includes a capturing unit that captures the solar panel 11 placed on the inspection stand 300 and a transmission unit that provides the captured image to the defect detection device 100. In addition, the image sensor 200 according to an embodiment of the present invention further includes a moving unit that can adjust a capturing direction of the image sensor 200 under the control of the defect detection device 100. All or at least some of components of the image sensor 200 including the capturing unit, the transmission unit, and the moving unit may be implemented in the form of a software module or a hardware module executed by a processor, or may be implemented in the form of a combination of a software module and a hardware module. The capturing unit captures an image in a specified direction. At this time, when the solar panel 11 is positioned at a specified location on the inspection stand 300, the capturing unit automatically acquires an image of the solar panel 11. Alternatively, the capturing unit acquires an image of the solar panel 11 when the solar panel 11 is placed on the inspection stand 300 and then a certain period of time has passed or when there is no movement of the solar panel 11 for a specified period of time. Alternatively, the capturing unit acquires an image of the solar panel 11 according to a predefined capturing cycle. The capturing unit includes at least one type of sensor (e.g., at least one of a black and white image sensor, an RGB sensor, a light sensor, a thermal imaging sensor, and a depth sensor) having a resolution capable of detecting at least the surface flatness of the solar panel 11. Meanwhile, the capturing unit may also obtain an image of the solar panel 11 in response to the control of the defect detection device 100. In this case, the transmission unit of the image sensor 200 receives a capturing signal from the defect detection device 100 and transmits it to the capturing unit. To this end, the transmission unit is responsible for interfacing (e.g., signal transmission and reception) with the defect detection device 100. The transmission unit transmits a control signal of the defect detection device 100 to the capturing unit, and transmits an image of the solar panel 11 captured by the capturing unit to the defect detection device 100. The moving unit of the image sensor 200 adjusts at least one of the position or capturing direction of the image sensor 200. The moving unit may include, for example, a moving member capable of moving the image sensor in at least one direction in a horizontal plane, or a flying member capable of moving the image sensor in at least one direction in a vertical plane and a horizontal plane.

If the moving unit includes the flying member, the image sensor 200 may be at least a part of a drone device. If the moving unit includes the flying member, the image sensor 200 may obtain a captured image of the solar panel 11 placed at a designated location while moving along a pre-stored moving route and provide the obtained image to the defect detection device 100. Alternatively, based on administrator's control or pre-stored information, the defect detection device 100 transmits information on the moving location or moving route of the image sensor 200 to the moving unit of the image sensor 200 through the transmission unit. A timing when the image sensor 200 including the moving unit captures an image of the solar panel 11 by using the capturing unit may be after the solar panel 11 is installed at a designated location for photovoltaic power generation. If the drone-type image sensor 200 is configured to utilize the captured image of the solar panel 11, the inspection stand 300 may be a mounting stand provided for photovoltaic power generation of the solar panel 11. The mounting stand supports the solar panel 11 and is configured to adjust the mounting direction of the solar panel 11 depending on the design shape.

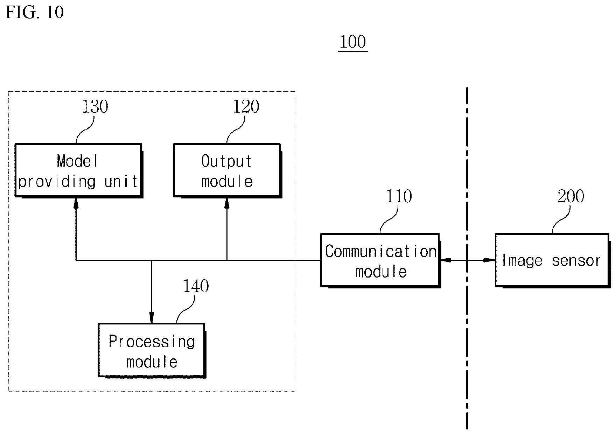

The defect detection device 100 obtains the captured image of the solar panel 11 by controlling the image sensor 200 and generates an attention map by applying the obtained captured image to a pre-stored model. The defect detection device 100 compares at least one feature point highlighted in the attention map with a data table (or an abnormal data table) corresponding to a defective panel and thereby determines whether the solar panel 11 corresponding to the attention map has a defect. The defect detection device 100 includes a configuration as shown in FIG. 10.

FIG. 10 is a diagram showing an example of a configuration of a defect detection device of a solar panel according to an embodiment of the present invention.

Referring to FIG. 10, the defect detection device 100 may include a communication module 110, an output module 120, a model providing unit 130, and a processing module 140.

The communication module 110 supports the communication function of the defect detection device 100. For example, the communication module 110 forms a communication channel with the image sensor 200. The communication module 110 transmits control information related to controlling the image sensor 200 to the image sensor 200. In addition, the communication module 110 receives an image acquired by the image sensor 200. In another example, the communication module 110 may form a communication channel with a specific server device in relation to information collection of the defect detection device 100, and receive information (or data) corresponding to a pre-trained model (e.g., a pre-trained CNN model) from the specific server device. Alternatively, the communication module 110 may receive a large-scale public data set (e.g., an MNIST data set or an ImageNet data set) used for generating the pre-trained model from the specific server device. The communication module 110 forms a communication channel with a management office's terminal or manager's terminal (hereinafter, a management terminal) that manages the presence or absence of a defect in the solar panel 11. For example, if a defect is detected in a specific solar panel 11, the communication module 110 transmits management information indicating the detection of a defect in the solar panel 11 to the management terminal in response to the control of the processing module 140. At this time, the management information transmitted contains identification information (or serial information) of the solar panel in which a defect is detected. Additionally, the management information may further contain at least one of the original captured image and the attention map used in defect detection.

The output module 120 outputs various kinds of information related to the operation of the defect detection device 100. In this regard, the output module 120 includes at least one of an audio device capable of outputting an audio signal and a display device capable of outputting text or an image. Alternatively, the output module 120 may include a vibration module or a beep signal output device capable of notifying the detection of a defect in the solar panel 11. If the result of the defect detection in the solar panel 11 is set to be transmitted to the management terminal, the output module 120 may be omitted. The output module 120 may output at least one of information related to a pre-trained model, information on at least one feature point applied to the pre-trained model, a captured image provided by the image sensor 200, an attention map generated by applying the captured image to the pre-trained model, feature point information extracted from the attention map, and information on the presence or absence of a defect determined by comparison with a comparison value (or reference value) corresponding to a predefined defect panel. In addition, the output module 120 may output state information of the image sensor 200. For example, the output module 120 may output whether the image sensor 200 is activated, capturing direction information of the image sensor 200, a preview image collected by the image sensor 200, location information of the image sensor 200, etc.

The model providing unit 130 stores and manages a pre-trained model and provides the pre-trained model to the processing module 140 at the request of the processing module 140. Alternatively, the model providing unit 130 generates and stores a pre-trained model from a large-scale public data set (e.g., MNIST data set or ImageNet) received through the communication module 110. The pre-trained model is a model related to attention map generation and may include a model generated by applying the attention mechanism to the large-scale public data set. In a model generation process, information on at least one feature point (e.g., at least one of the flatness, average, kurtosis, and skewness of the panel) may be applied in order to reduce the amount of computation in a training process. The feature points applied to the generation of the pre-trained model may also be used in a later process of determining whether or not the panel is defective through the attention map.

The processing module 140 performs transmission of signals, reception and processing of data or signals required for the operation of the defect detection device 100. For example, the processing module 140 controls the collection and storage of the pre-trained model. In this regard, the processing module 140 collects the large-scale public data set (e.g., MNIST data set or ImageNet data set) or obtains a pre-stored one from a storage unit, and applies the attention mechanism (e.g., simple CNN) to the large-scale public data set to prepare the pre-trained model. Alternatively, the processing module 140 receives the pre-trained model from a server device for providing the pre-trained model through the communication module 110 and stores it in the model providing unit 130. In relation to receiving images regarding the solar panel 11, the processing module 140 controls the operation of the image sensor 200. For example, the processing module 140 transmits control information regarding the timing of capturing an image of the solar panel 11 to the image sensor 200. When the image sensor 200 is included in at least a part of the drone device, the processing module 140 controls the position of the image sensor 200 to move the image sensor 200 to the position of the solar panel 11 to be inspected for defects. The processing module 140 receives the image of the solar panel 11 acquired by the image sensor 200 and applies the received image to the pre-trained model to extract the attention map. The processing module 140 emphasizes a defective part of the solar panel 11 through the attention map. In this process, the processing module 140 extracts at least one statistical feature (e.g., a standard deviation value of the surface flatness of the panel) from the attention map. Additionally, the processing module 140 extracts at least one of kurtosis, skewness, and average for the surface flatness from the attention map. The processing module 140 determines whether there is a defect, based on the extracted statistical feature. In this regard, the processing module 140 may store and manage statistical feature values when a defect occurs in the solar panel 11 as comparison values or reference values. Alternatively, the processing module 140 stores and manages predefined criterion values or reference values that can be used to determine that a defect occurs in the solar panel 11. In an example, the processing module 140 compares the reference value for the surface flatness of the defective solar panel 11 with the label value defining the surface flatness and the defective state of the solar panel extracted from the attention map generated from the currently acquired captured image, and determines the presence or absence of a defect based on the correlation. In this process, the processing module 140 determines that the solar panel 11 is defective if the correlation coefficients between the comparison value and the current value have high similarity. Additionally, the processing module 140 can improve the defect detection performance by comparing other statistical features (e.g., at least one of the average value, the kurtosis and skewness of the captured image, or the kurtosis and skewness for surface flatness) with the attention map. If the processing module 140 determines that the solar panel 11 is defective, it outputs a message requesting replacement of the solar panel 11. Alternatively, the processing module 140 transmits the result on whether the solar panel 11 is defective to the management terminal through the communication module 110.

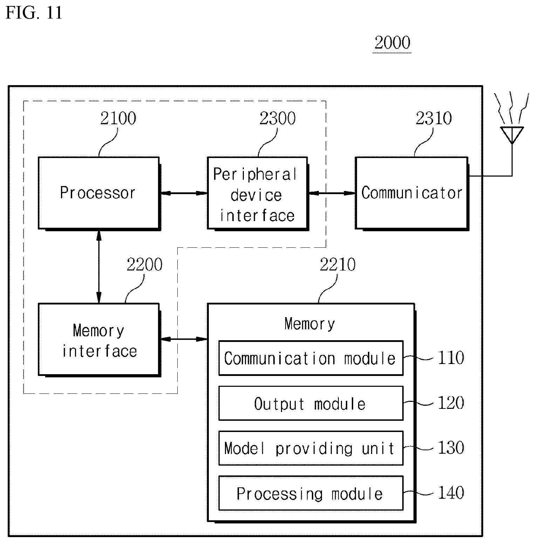

FIG. 11 is an exemplary diagram of a hardware system for implementing a defect detection device according to an embodiment of the present invention.

Referring to FIG. 11, the above-described defect detection device 100 may include, for example, a mobile terminal such as a smart phone, a notebook, a desktop, a laptop, a wired or wireless mobile or fixed controller having a user interface, or a server. Without being limited thereto, any type of device equipped with a computational means and a communication means may be included.

For reference, in the case where the defect detection device 100 is implemented in the form of a server, it may be implemented in the form of, for example, a web server, a database server, a proxy server, or the like. Also, one or more of various software may be installed that enables a network load balancing mechanism or service device to operate on the Internet or any other network, and may thereby be implemented as a computerized system.

Here, the network may be an http network, a private line, an intranet, or any other network. Further, respective components in the system according to an embodiment of the present invention may be connected to a security network so that data is not attacked by any hacker or other third party.

Each component in the above-described defect detection device 100 may be implemented in the form of a software module or hardware module executed by a processor or may be implemented in the form of a combination of a software module and a hardware module.

As such, the software module, the hardware module, or a combination thereof executed by the processor can be implemented as an actual hardware system (e.g., a computer system).

Hereinafter, a hardware system 2000 that implements the defect detection device 100 according to an embodiment of the present invention in hardware form will be described with reference to FIG. 11.

As shown in FIG. 11, the hardware system 2000 may include a processor 2100, a memory interface 2200, and a peripheral device interface 2300.

These respective elements in the hardware system 2000 may be individual components or be integrated into one or more integrated circuits and may be connected by a bus system (not shown).

Here, the bus system is an abstraction that represents any one or more separate physical buses, communication lines/interfaces, and/or multi-drop or point-to-point connections, connected by appropriate bridges, adapters, and/or controllers.

The processor 2100 serves to execute various software modules stored in the memory 2210 by communicating with the memory 2210 through the memory interface 2200 in order to perform various functions in the hardware system.

In the memory 2210, components such as the communication module 110, the output module 120, the model providing unit 130, and the processing module 140 in the defect detection device 100 described above in FIG. 10 may be stored in the form of software modules, and the operating system (OS) may be further stored.

The operating system (e.g., embedded operating system such as I-OS, Android, Darwin, RTXC, LINUX, UNIX, OS X, WINDOWS, or VxWorks) includes various procedures, command sets, software components and/or drivers that control and manage general system tasks (e.g., memory management, storage device control, power management, etc.) and plays a role in facilitating communication between various hardware modules and software modules.

The memory 2210 may include a memory hierarchy including, but not limited to, a cache, a main memory, and a secondary memory. The memory hierarchy may be implemented via, for example, any combination of RAM (e.g., SRAM, DRAM, DDRAM), ROM, FLASH, magnetic and/or optical storage devices (e.g., disk drive, magnetic tape, compact disk (CD), digital video disc (DVD)).

The peripheral device interface 2300 serves to enable communication between the processor 2100 and peripheral devices.

The peripheral devices are to provide different functions to the hardware system 2000, and may include a communicator 2310 for example.

The communicator 2310 serves to provide a communication function with other devices. For this purpose, the communicator 2310 may include, for example, but not limited to, an antenna system, an RF transceiver, one or more amplifiers, a tuner, one or more oscillators, and a digital signal processor, a CODEC chipset, and a memory, and may also include a known circuit that performs this function.

The communicator 2310 may support communication protocols such as, for example, WLAN (Wireless LAN), DLNA (Digital Living Network Alliance), Wibro (Wireless Broadband), Wimax (World Interoperability for Microwave Access), GSM (Global System for Mobile communication), CDMA (Code Division Multi Access), CDMA2000 (Code Division Multi Access 2000), EV-DO (Enhanced Voice-Data Optimized or Enhanced Voice-Data Only), WCDMA (Wideband CDMA), HSDPA (High Speed Downlink Packet Access), HSUPA (High Speed Uplink Packet Access), IEEE 802.16, LTE (Long Term Evolution), LTE-A (Long Term Evolution-Advanced), 5G communication system, WMBS (Wireless Mobile Broadband Service), Bluetooth, RFID (Radio Frequency Identification), IrDA (Infrared Data Association), UWB (Ultra-Wideband), ZigBee, NFC (Near Field Communication), USC (Ultra Sound Communication), VLC (Visible Light Communication), Wi-Fi, Wi-Fi Direct, and the like. In addition, as wired communication networks, wired LAN (Local Area Network), wired WAN (Wide Area Network), PLC (Power Line Communication), USB communication, Ethernet, serial communication, optical/coaxial cables, etc. may be included. This is not a limitation, and any protocol capable of providing a communication environment with other devices may be included.

In the hardware system 2000 according to an embodiment of the present invention, each components of the defect detection device 100 stored in the memory 2210 in the form of a software module performs an interface with the communicator 2310 via the memory interface 2200 and the peripheral device interface 2300 in the form of a command executed by the processor 2100. It is therefore possible to efficiently support the adjustment of the installation structure of the image sensor 200 based on the results of image consistency determination based on a previously learned alignment model.

As described above, according to the respective elements in the image sensor operating environment according to an embodiment of the present invention, in relation to an image sensor installed for the purpose of predicting/detecting a defect in a point of interest in a manufacturing process, it is possible to intuitively support the installation structure adjustment of the image sensor based on the result of the image-to-image consistency determination. So it can be seen that it becomes possible to install and operate the image sensor without a sensor installation expert, thus maximizing cost efficiency.

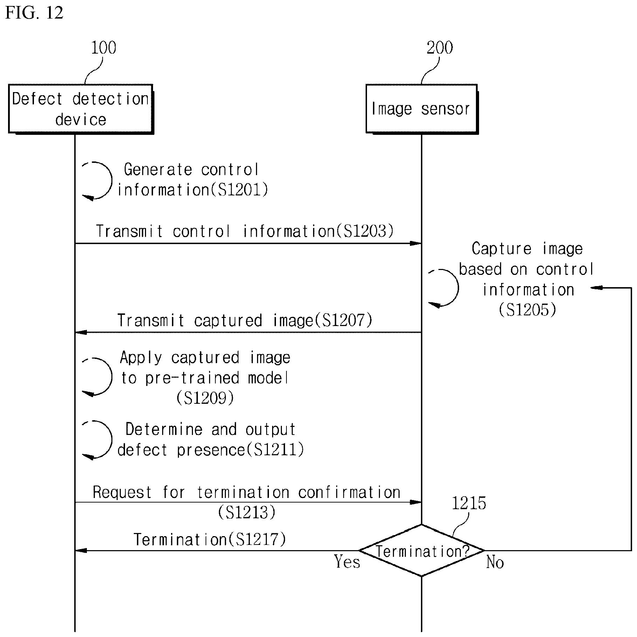

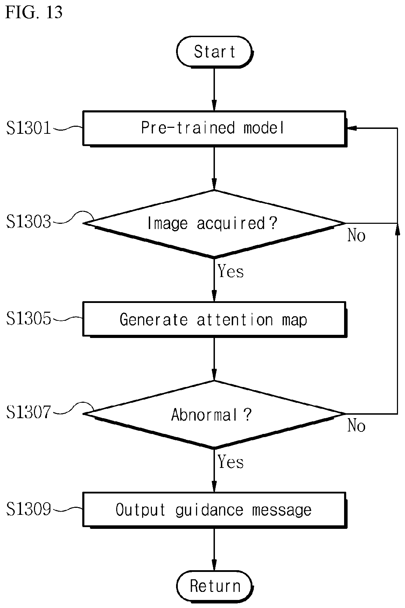

Hereinafter, an operation method of components related to the defect detection technology of a solar panel according to an embodiment of the present invention will be described with reference to FIGS. 12 and 13.

FIG. 12 is a diagram showing an example of a signal flow between devices for defect detection of a solar panel according to an embodiment of the present invention.

Referring to FIG. 12, in the signal flow between components in the system environment related to solar panel defect detection according to an embodiment of the present invention, the defect detection device 100 generates control information in step S 1201. The control information may include various signals related to controlling the image sensor 200 and acquiring captured images. For example, the control information includes at least one of a turn-on/turn-off control signal of the image sensor 200, an initialization signal of the image sensor 200, a capturing direction control signal of the image sensor 200, and a capturing timing control signal of the image sensor 200. In the case where the image sensor 200 constitutes at least a part of a drone, the control information further includes a position control signal of the image sensor 200 (e.g., a signal including movement route information for moving the image sensor 200 to capturing positions of at least one solar panel 11. When the solar panel 11 is placed on the inspection stand 300 and then captured, the control information includes a transport control signal of the solar panel 11 and a movement path control signal of a defective panel and a non-defective panel.

In step S1203, the defect detection device 100 transmits the control information to the image sensor 200. In this regard, the defect detection device 100 can form a communication channel with the image sensor 200. The communication channel is formed through at least one of a wired or wireless scheme.

In step S1205, the image sensor 200 performs image capturing based on the control information. For example, the image sensor 200 performs image capturing for the solar panel 11 according to a capturing cycle contained in the control information. In this process, the image sensor 200 may provide a preview image for the solar panel 11 placed on the inspection stand 300 to the defect detection device 100, and upon receiving a capturing signal for acquiring a captured image from the defect detection device 100, it may capture an image in response to the received capturing signal. Alternatively, when the solar panel 11 is placed at a designated location on the inspection stand 300, the image sensor 200 may capture an image for the solar panel 11. Alternatively, the image sensor 200 may check whether the solar panel 11 is moving, and if there is no movement for a designated time, it may capture an image for the solar panel 11.

In another example, in the case where the image sensor 200 is disposed on at least a part of the drone device, the control information contains location information of the image sensor 200. Accordingly, the image sensor 200 moves to a designated location using a moving member provided in the drone device, based on the location information contained in the control information. If the solar panel 11 installed at the corresponding location is located within a designated angle of view, the image sensor 200 captures an image of the solar panel 11. Alternatively, while acquiring a preview image, the image sensor 200 captures an image of the solar panel 11 if the size of the solar panel 11 is detected to be larger than a designated size. In the case where the control information contains information on a plurality of locations, the image sensor 200 moves according to the information on the plurality of locations and captures images of the solar panels 11 installed at the corresponding locations. If the solar panel 11 is not placed at the designated location, the image sensor 200 may capture an image at the corresponding location and also provide the defect detection device 100 with information indicating that the solar panel 11 does not exist.

In step S1207, the image sensor 200 transmits the captured image to the defect detection device 100. As mentioned above, the captured image includes an image obtained by capturing the solar panel 11 including a plurality of solar cells. At this time, the captured image includes at least one of various types of images, such as a black and white image, a color image, and a depth image. In another example, the image sensor 200 may divide the captured image into units of a specified size and sequentially provide the divided images to the defect detection device 100. At this time, the image sensor 200 may divide the captured image into a plurality of solar cell groups and transmit each divided solar cell group to the defect detection device 100.

In step S1209, the defect detection device 100 applies the captured image to a pre-trained model. The pre-trained model includes a training model that provides a large-scale public data set (e.g., MNIST data set or ImageNet data set) to a convolutional neural network to which an attention mechanism is applied. In this regard, the defect detection device 100 collects the large-scale public data set and generates the pre-trained model by using CNN. Alternatively, the defect detection device 100 may receive the pre-trained model from an external device (or a server device providing the model). In the process of generating the training model, the defect detection device 100 may generate the training model based on information about at least one feature point (e.g., at least one of standard deviation, average value, kurtosis, and skewness for surface flatness), thereby reducing the amount of computation required for model training.

In step S1211, the defect detection device 100 determines and outputs whether there is a defect. To this end, the defect detection device 100 applies the captured image provided by the image sensor 200 to the pre-trained model and thereby extracts an attention map. The defect detection device 100 can determine whether there is a defect, by analyzing areas highlighted by the attention map. For example, the defect detection device 100 extracts statistical features for the areas highlighted by the attention map, and identifies a correlation between the extracted features and the defective correlation coefficients corresponding to the statistical features (e.g., a correlation between a label of the feature of a defective solar panel or an abnormal panel and the statistical feature values of a currently acquired image). The defect detection device 100 determines whether there is a defect, based on the similarity of the correlation. If the solar panel 11 is determined to be defective, the defect detection device 100 outputs a message indicating that a defect has occurred in the corresponding solar panel 11. At this time, using the output module 120, the defect detection device 100 outputs at least one of text, image, and audio signal corresponding to the message. Alternatively, the defect detection device 100 transmits the message to an external device (e.g., an external speaker or a management terminal) connected through the communication module 110.

In step S1213, the defect detection device 100 transmits a termination confirmation request message to the image sensor 200 to terminate the operation of detecting whether there is a defect in the solar panel 11. For example, the defect detection device 100 transmits the message to the image sensor to check whether there is an additional solar panel for which a defect is to be determined. In step S 1215, if there is no additional solar panel 11 for which a defect is to be determined, the image sensor 200 notifies termination to the defect detection device 100 in step S1217. Meanwhile, if there is a solar panel for which a defect is to be determined in step S1215, the process returns to the step S1205 and re-performs the subsequent operations.

In the step S1213, if information about the number of solar panels 11 to be inspected or the positions of the solar panels 11 is stored in the defect detection device 100, the defect detection device 100 does not transmit the termination confirmation request message to the image sensor 200 and transmits a message instructing termination to the image sensor 200. In response, the image sensor 200 switches to an inactive state.

FIG. 13 is a diagram showing an example of a method of operating a defect detection device in defect detection of a solar panel according to an embodiment of the present invention.

Referring to FIG. 13, in a method for operating a defect detection device related to defect detection of a solar panel according to an embodiment of the present invention, the defect detection device 100 prepares a pre-trained model in step S1301. The pre-trained model may include a model that applies an attention mechanism (e.g., a convolutional neural network) to a large-scale public data set (e.g., an MNIST data set or an ImageNet data set). When preparing the pre-trained model, the defect detection device 100 may apply at least one feature point (e.g., at least one of standard deviation, average, kurtosis, and skewness for surface flatness) to the solar panel 11. The feature point applied when preparing the pre-trained model may be used when determining whether the solar panel 11 is defective.

In step S1303, the defect detection device 100 checks whether an image is acquired. In this regard, the defect detection device 100 forms a communication channel with the image sensor 200 and prepares to receive a captured image of the solar panel 11 from the image sensor 200. In this process, if initialization of the image sensor 200 is required, the defect detection device 100 transmits control information related to the initialization of the image sensor 200 to the image sensor 200. If there is no image acquisition, the process returns to the step S1301 and waits or re-performs the subsequent operations. Alternatively, if there is no image acquisition for a specified time, the defect detection device 100 may switch to a sleep state or an inactive state.

In step S1303, if an image is acquired, the defect detection device 100 generates an attention map for the acquired image. To generate the attention map, the defect detection device 100 applies (or matches) the received image to a pre-trained model.

In step S1305, the defect detection device 100 checks whether the attention map is abnormal. If the attention map is normal, the defect detection device 100 returns to the step S1301 and re-performs the subsequent operations, and if the attention map is abnormal, the defect detection device 100 outputs a guidance message in step S1309. To this end, the defect detection device 100 pre-stores abnormal data (e.g., a comparison value table corresponding to features of the attention map in an abnormal state or label values corresponding to features of a defective panel) and compares the pre-stored abnormal data with the currently acquired attention map. Alternatively, the defect detection device 100 extracts at least one statistical feature (e.g., at least one of the standard deviation, average, kurtosis, or skewness for the surface flatness of a panel) from the attention map and compares (e.g., detects a correlation) the extracted statistical features with the pre-stored abnormal data (e.g., statistical features of a defective panel).

Meanwhile, although the structure in which the defect detection device 100 for the solar panel and the image sensor 200 are separated and operate through the communication module 110 has been described, the present invention is not limited thereto. For example, at least a part of the defect detection device 100 that detects a defect in the solar panel 11 may be included in the image sensor 200. In this case, an input device for user input related to the operation control of the defect detection device 100 is provided separately, or a management terminal plays that role. In another example, in order to perform defect detection of the solar panel 11 more quickly and comprehensively, a plurality of image sensors 200 are configured to capture images of a plurality of solar panels, and when the defect detection device 100 receives the plurality of images, the defect detection device 100 may perform a comparative analysis of the plurality of images simultaneously (in parallel) or in time order to quickly process the determination on whether there is a defect.

As described above, the defect detection device for solar panels of the present invention and the operating method thereof not only reduce the computational cost in the learning process by using the statistical feature extraction method for determining whether the panel is defective, but also improve the functional information by recycling the pre-trained attention mechanism, so that it consumes low energy during the training and inference process of the defect detection model in the case of being applied to the detection of defects in solar panels to maintain the renewable power generation efficiency at an appropriate level. For example, the AUROC is improved from a maximum of 0.631 to 0.823 through the attention mechanism of the recycle model. The present invention defines statistical features in solar panels to reduce the computational load in the training procedure and uses them to detect defects in the solar panels. Here, the present invention can improve the feature value by applying the attention mechanism that guides key information and reusing the pre-trained convolutional neural network that has learned the large-scale public data set (e.g., MNIST data set or ImageNet data set).

Meanwhile, functional operations described herein may be implemented as digital electronic circuits, or implemented as computer software, firmware, or hardware including the structure disclosed herein and structural equivalents thereof, or implemented with a combination thereof. The subject matter described herein may be implemented with one or more computer program products, that is, one or more modules of computer program instructions encoded on a tangible program storage medium for execution by or for controlling the operation of a processing system.

A computer-readable medium may be a machine-readable storage device, a machine-readable storage substrate, a memory device, a composition of matter that affects a machine-readable propagation-type signal, or a combination thereof.

In this disclosure, the term 'system' or 'device' encompasses all mechanisms, devices, and machines for processing data, including, for example, a programmable processor, a multi-processor, or a computer. The processing system may include, in addition to hardware, code that forms an execution environment for a computer program upon request, such as, for example, code constituting processor firmware, a protocol stack, a database management system, an operating system, or a combination thereof.

A computer program (also known as a program, software, software application, script or code) may be written in any form of programming language, including compiled or interpreted language, a priori or procedural language, and may be deployed in any form including stand-alone programs or modules, components, subroutines, or other units suitable for use in a computer environment. A computer program does not necessarily correspond to a file in a file system. A program may be stored in a single file provided to the requested program, or in multiple interacting files (e.g., one or more modules, subprograms, or files that store portions of code), or in a portion (e.g., one or more scripts stored within a markup language document) of a file that holds other programs or data. A computer program may be deployed to be executed on a single computer or multiple computers located at one site or distributed across multiple sites and interconnected by a communication network.

On the other hand, computer readable media suitable for storing computer program instructions and data may include all forms of non-volatile memory, media and memory devices, including semiconductor memory devices such as EPROM, EEPROM and flash memory devices, magnetic disks such as internal hard disks or external disks, magneto-optical disks, and CD-ROM and DVD-ROM disks. The processor and the memory may be supplemented by, or incorporated into, special purpose logic circuitry.

An implementation of the subject matter described herein may be implemented in a computing system that includes a back-end component such as a data server, a middleware component such as an application server, a front-end component such as a client computer having a web browser or graphical user interface through which a purchaser may interact with an implementation of the subject matter described herein, or any combination of one or more of such back-end, middleware, and front-end components. The components of the system are inter-connectable by any form or medium of digital data communication, such as, for example, a communication network.

While the specification contains many specific implementation details, these should not be construed as limitations on the scope of any disclosure or of what may be claimed, but rather as descriptions of features that may be specific to particular embodiments of particular disclosures. Certain features that are described in the specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Also, although the present specifications describe that operations are performed in a predetermined order with reference to a drawing, it should not be construed that the operations are required to be performed sequentially or in the predetermined order, which is illustrated to obtain a preferable result, or that all of the illustrated operations are required to be performed. In some cases, multitasking and parallel processing may be advantageous. Also, it should not be construed that the division of various system components are required in all types of implementation. It should be understood that the described program components and systems are generally integrated as a single software product or packaged into a multiple-software product.

While this disclosure has been particularly shown and described with reference to an exemplary embodiment thereof, it will be understood by those skilled in the art that various changes in form and details may be made therein without departing from the scope of this disclosure as defined by the appended claims.

### [Industrial Applicability]

According to the solar panel defect inspection device of the present invention and the operating method thereof, it is possible to more accurately determine whether a solar panel is defective while using a lower-cost training model. Therefore, the present invention is an invention with industrial applicability because it overcomes the limitations of existing technologies, and thus has sufficient potential for commercialization or sales of devices applicable to and usable in related technologies, and can be clearly implemented in reality.

### [Reference numerals]

100: Defect detection device
110: Communication module
120: Output module
130: Model providing unit
140: Processing module
200: Image sensor

## Claims

1. A device for detecting a defect of a solar panel, the device comprising:
a model providing unit that provides a pre-trained model;
a communication module that receives captured images of a solar panel from an image sensor; and
a processing module functionally connected to the model providing unit and the communication module,
wherein the processing module is configured to collect the captured images of the solar panel, generate an attention map by applying the captured images to the pre-trained model, and determine whether there is a defect in the solar panel depending on whether the attention map is abnormal.

2. The device of claim 1, wherein the processing module applies an attention mechanism that includes convolutional neural network training on a large-scale public data set.

3. The device of claim 1, wherein the processing module is configured to extract at least one statistical feature from the attention map, detect a correlation between the extracted statistical feature and a label value indicating a defective solar panel, and determine whether the solar panel is defective based on a degree of the correlation.

4. The device of claim 3, wherein the processing module is configured to extract a standard deviation of a surface flatness of the solar panel from the attention map, and detect a correlation between a standard deviation of a surface flatness of the defective solar panel and the standard deviation of the surface flatness extracted from the attention map.

5. The device of claim 4, wherein the processing module is configured to extract at least one of an average value of the surface flatness, a kurtosis of the surface flatness, and a skewness of the surface flatness, and detect a correlation between at least one of the extracted average value, kurtosis, and skewness and at least one of an average value, kurtosis, and skewness in a map generated from an image of the defective solar panel.

6. The device of claim 1, further comprising:
an output module that outputs a guidance message indicating whether the solar panel is defective.

7. A method for operating a defect detection device for a solar panel, the method comprising:
preparing a pre-trained model;
collecting captured images of the solar panel;
generating an attention map by applying the captured images to the pre-trained model; and
determining whether there is a defect in the solar panel depending on whether the attention map is abnormal.

8. The method of claim 7, wherein preparing the pre-trained model includes applying an attention mechanism that includes convolutional neural network training on a large-scale public data set.

9. The method of claim 7, wherein determining whether there is the defect includes:
extracting at least one statistical feature from the attention map;
detecting a correlation between the extracted statistical feature and a label value indicating a defective solar panel; and
determining whether the solar panel is defective based on a degree of the correlation.

10. The method of claim 9, wherein extracting the statistical feature includes extracting a surface flatness of the solar panel from the attention map, and
detecting the correlation includes detecting a correlation between a surface flatness of the defective solar panel and the surface flatness extracted from the attention map.

11. The method of claim 10, wherein extracting the statistical feature includes extracting at least one of an average value of the surface flatness, a kurtosis of the surface flatness, and a skewness of the surface flatness, and
detecting the correlation includes detecting a correlation between at least one of the extracted average value, kurtosis, and skewness and at least one of an average value, kurtosis, and skewness in a map generated from an image of the defective solar panel.

12. The method of claim 7, further comprising:
outputting a guidance message indicating whether the solar panel is defective.
